# EUROPEAN PATENT SPECIFICATION

(11) **EP 2 397 253 B1**
(45) Date of publication and mention of the grant of the patent: **06.03.2013**
(21) Application number: 11169704.1
(22) Date of filing: 13.06.2011
(51) Int. Cl.: B23Q 11/12

(54) **A cooled rotating member, in particular of machine tools**
Gekühltes Drehelement, insbesondere für Werkzeugmaschine
Element rotatif pour machines-outil en particulier

(30) Priority: 15.06.2010 IT PC20100016
(43) Date of publication of application: 21.12.2011
(73) Proprietor: STS Services S.r.l., 29027 Podenzano (PC) (IT)
(72) Inventor: Lertua, Paolo, 29027 Podenzano (PC) (IT)
(74) Representative: Fisauli, Beatrice A. M.

(56) References cited:
- EP-A1- 1 927 431
- DE-U1-202006 011 862
- JP-A- 4 002 439
- JP-A- 4 019 037
- JP-A- 56 134 153

## Description

The present invention relates to a cooled rotating member, and in particular a rotating member of machine tools, such as spindles, electrospindles, electric motors or shafts in general.

Almost all devices with moving members generate a certain amount of heat. In machinery such as machine tools, the main causes of heat generation are friction between rotating members (shafts/supports, gears, belts, etc.) or the Joule effect of the various electric drives (electric motors, electrospindles and the like).

These collateral effects are almost always undesirable and at times damaging both for the correct functioning of the machinery and for the duration and reliability thereof.

In some cases, natural forms of heat exchange, such as radiation and convection, are sufficient to maintain the temperature of the device within acceptable intervals. In other cases simple cooling systems are required to solve the problem, such as forced convection or the increase of radiant surfaces.

However, in many other cases if the configuration of the members of the machinery does not promote dissipation of heat, or if the thermal energy produced is greater than the energy that can be dissipated with the simple systems described above, additional cooling devices are necessary, capable of removing the amount of thermal energy required to maintain the components of the machinery within an established operating temperature range.

In machine tools, due to the high rotation speed of the various members, it is often necessary to make use of this second type of cooling.

Known devices generally comprise an external unit which supplies refrigerant fluid at a controlled temperature.

In detail, a cooling unit is provided, adapted to cool a cooling fluid which, once taken to the required temperature, is conveyed by means of pumps or the like through specific pipes, in proximity of the machine members whose temperature is to be controlled.

In greater detail, said cooling unit comprises a refrigeration machine and a fluid-to-fluid heat exchanger, in which the refrigerant fluid of the refrigeration machine that exchanges heat with said cooling fluid (for example a mixture of water and glycol) circulates, to lower the temperature thereof.

Said cooling fluid is therefore made to circulate in proximity of these members so that it can absorb a certain amount of thermal energy, lowering the temperature thereof. The fluid is then conveyed back toward the cooling unit, in the heat exchanger, where the temperature is lowered once again for a new cooling cycle. These prior art systems have a series of disadvantages and limitations, especially if the machine tools are of medium or large dimensions.

As already mentioned, in fact the cooling unit is provided with at least one pipe to feed the cooling fluid toward the member or members of the machine to be cooled, and at least one return pipe toward said unit.

If the machinery is of medium or large dimensions, these pipes can reach lengths of several meters (even over 20 meters), causing load losses and considerable dissipation during transport of the cooling fluid, despite the fact that they are covered with insulating materials.

On machines of large dimensions (e.g. to machine workpieces measuring over 5000 mm per side) at times the thermal power of the cooling unit must be three or four times greater than the rated power required to cool the rotating member, due to said losses and dissipation.

Moreover, as said pipes must reach members that are continuously in movement in the working area (such as spindles or electrospindles), they are often provided with movable or articulated joints which are difficult to insulate.

Moreover, if said members to be cooled comprise removable parts, such as accessories or the like, the presence of pipes often creates important restrictions and critical points, in particular when assembly and disassembly operations are frequent.

JP 4019037 A discloses a cooling device of a machine tool comprising a spindle supported by a housing through bearings, and an evaporating chamber formed at the peripheral regions of the bearings. Said chamber is in connection with a low pressure piping of a cooling device fitted with a compressor, condenser, and expansion mechanism. The bearings and the spindle are cooled through the evaporating action of refrigerant in the evaporating chamber built in the cooling device.

JP 56134153 A discloses a spindle stock comprising a refrigeration compressor a condenser and a liquid reservoir for storing liquefied refrigerant. When the main spindle is revolved for working operation, heat generated at bearings tends to rise the temperature of the spindle stock. When the temperature of the stock reaches at the set temperature, the stock is properly cooled to keep at constant temperature by means of a temperature regulator and a flow regulating valve.

In this context, the object of the present invention is to provide a cooled rotating member, in particular a rotating member of machine tools, which overcomes the aforesaid problems of the prior art.

In particular, the object of the invention is to provide a cooled rotating member, which makes it possible to eliminate or in any case limit the problem of dissipation of prior art cooling units.

In detail, the object of the invention is to provide a cooled rotating member which allows the cooling unit to be positioned in proximity of the member to be cooled in such a manner as to be able to use the refrigerant fluid of the refrigeration machine as cooling fluid, to reduce the length of the pipes and consequently dissipation.

A further object of the present invention is to supply a cooled rotating member provided with a more compact cooling device, simplified with respect to prior art systems and which integrates better on machinery such as machine tools or the like.

These specified objects are substantially achieved by a cooled rotating member, in particular of machine tools, according to appended claim 1.

The refrigerant fluid of the cooling device can therefore be used directly as means to cool the rotating member. Moreover, in this manner it is possible to simplify the cooling device and in particular, due to positioning of the compressor, it is possible to considerably reduce the length of the pipes of the circuit and consequently heat dissipation with respect to prior art devices.

The mechanical power supplied to the rotating member can therefore be used also to drive the compressor, without requiring to use a dedicated motor with separate electrical power supply.

According to the type of compressor used, the mechanical connection can take place directly, i.e. without reduction ratio, or through a mechanical reduction unit. According to a further aspect of the invention, the second heat exchanger can also be produced in the housing of the rotating member, maintaining the first heat exchanger in closer proximity to the rotating body to be cooled.

In this configuration, it is therefore possible to eliminate the further heat exchanger and related circuit in which the cooling fluid (water-glycol mixture) of prior art systems circulates, further reducing heat dissipation to the outside.

Further characteristics and advantages will be more apparent from the indicative, and therefore non-limiting, description of an example of a preferred but not exclusive embodiment of the invention, as shown in the accompanying figures wherein:
- Fig. 1 is a schematic view of the rotating member provided with a cooling device, according to a not claimed background example;
- Fig. 2 is a schematic view of the rotating member provided with a cooling device, according to a further not claimed background example;
- Fig. 3 is a schematic view of the rotating member provided with a cooling device, according to the preferred embodiment of the invention;

With reference to the accompanying figures, the rotating member indicated as a whole with 1 comprises a rotating body 2, a housing 3 of said rotating body and a cooling device indicated as a whole with 4.

As already mentioned, said rotating member can be a spindle of a machine tool, an electrospindle of a machine tool, an electric motor, or any rotating shaft, in particular of a machine tool, which for its working conditions requires to be cooled and maintained within a desired temperature range.

In the same way, the rotating body 2 can, for example, be the rotating shaft of a spindle or the stator or an electrospindle or of an electric motor.

Likewise, the housing 3 can, for example, be the case or casing of a spindle or of any rotating shaft or the case or the stator of an electrospindle or of an electric motor.

The cooling device 4 in general can be a heat engine that operates a refrigeration cycle.

In detail said refrigeration machine comprises a compressor 5, which compresses and circulates a refrigerant fluid inside the machine, an expansion valve 6 of said refrigerant fluid, at least a first heat exchanger 7 having its inlet connected to said expansion valve 6 and its outlet connected to said compressor 5, and at least a second heat exchanger 8 having its inlet connected to said compressor 5 and its outlet connected to said expansion valve 6.

Said compressor 5 compresses and pumps the refrigerant fluid through the second heat exchanger 8 (which acts as condenser) where the fluid passes from gaseous state to liquid state releasing thermal energy, is subsequently expanded in the expansion valve 6 lowering its temperature and conveyed into the heat exchanger 7 (which acts as evaporator) where said fluid evaporates at low pressure absorbing heat from the surrounding environment.

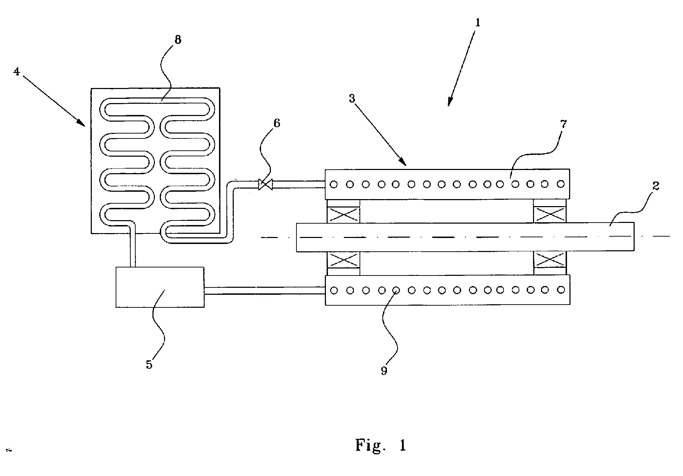

Advantageously at least said first heat exchanger 7, which forms the part with the lowest temperature of the circuit of the machine, is produced in the housing 3 of the rotating body 2 (fig. 1).

This allows the refrigerant fluid of the cooling device to be used directly to cool the rotating member; in this way it is therefore possible to eliminate the further heat exchanger and related circuit in which the cooling fluid (water-glycol mixture) of prior art systems circulates.

In detail, said heat exchanger 7 comprises a duct 9, inside which the evaporating refrigerant fluid circulates, wound around said housing 3 of the rotating body 2. Said duct can in turn comprise a pipe coiled around said housing (case, casing, stator, etc.) and appropriately insulated, or can be produced directly in the thickness of the body of the housing 3, as shown schematically in Fig. 1. Advantageously, the expansion valve 6 can also be mounted on the rotating member in proximity of the housing 3 or on said housing 3 of the rotating member 2.

In this way, the duct 9 of the first heat exchanger 7, in which the low temperature expanded refrigerant fluid circulates, can be produced practically entirely in said housing 3, reducing the length of the outer sections that can cause dissipation.

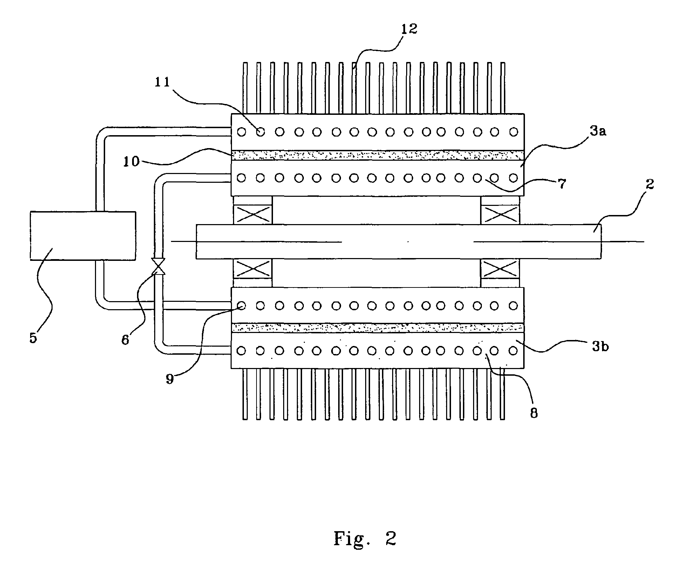

A characteristic of the background example is that of providing the compressor 5 mounted on the rotating body 2, in proximity of the housing 3 or mounted directly thereon (Fig. 2).

This therefore allows a further reduction in the length of the pipes in which the cooling fluid circulates and consequently in the heat dissipated to the outside during circulation.

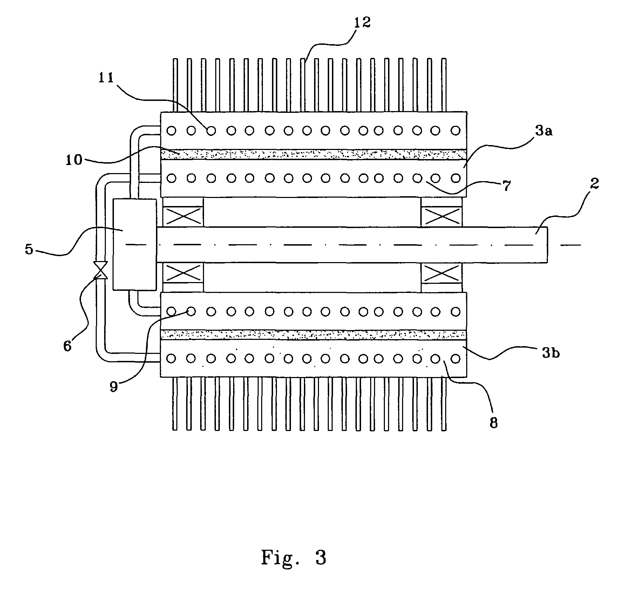

The heat engine required will therefore be of considerably smaller dimensions with respect to those of the prior art, with a large reduction in energy consumptions. The decrease in the dimensions of the heat engine also allows the various components to be positioned directly in proximity of the rotating member, and in particular allows the compressor to be connected directly to the rotating body 2. According to the embodiment, said compressor 5 is connected mechanically to the rotating body 2 (Fig. 3).

In this way it is possible to make use of the mechanical energy supplied by the rotating body 2 (for example, the rotating shaft of a spindle, or the rotor of an electrospindle or of an electric motor) to drive the compressor 5 in rotation.

In detail, said compressor 5 can be a volumetric compressor (of the piston, lobe, screw or gear type), a centrifugal compressor or any type of compressor suitable to operate with a refrigerant fluid in the range of pressure values required by a refrigeration cycle (from 15 Bar to 60 Bar approximately, according to the type of fluid used).

Coupling between the rotating body 2 and the compressor 5 can take place directly (with a higher number of revolutions), for example suitable for the use of a centrifugal compressor, or by interposing a speed reduction unit, for example suitable for the use of a volumetric compressor.

In both cases the cooling device can be appropriately designed to remove the correct amount of thermal energy from the rotating body 2 when the revolutions thereof are varied.

In fact, due to mechanical coupling of the compressor 5, the heat engine will have a heat removal capacity proportional to the number of revolutions of the rotating body 2.

In the same way, the thermal energy produced by the rotating body 2 (due to friction and to the Joule effect), and which must be removed, is also proportional to the number of revolutions.

Once the heat engine has been correctly dimensioned, cooling is regulated automatically without adopting further electronic devices (adjustable speed electric motors, inverters or the like).

The system will therefore be further simplified and more reliable.

Alternatively, said compressor 5 can be coupled to a proper power unit, such as an electric or hydraulic motor, but due to the smaller dimensions with respect to those of the prior art, it can be installed on the rotating member in proximity of the housing 3 or directly thereon.

In this case, the power supply can be the same one supplying the rotating member (electric or hydraulic).

In a further embodiment of the invention, both the first heat exchanger 7, and the second heat exchanger 8, are produced in the housing 3 of the rotating body 2 (Fig. 3).

In detail, said housing comprises a first part 3a, in which the first heat exchanger 7 is produced, and a second part 3b, in which said second heat exchanger 8 is produced.

According to the invention, said part 3a in which the first heat exchanger 7 is produced, is always closer to the rotating body 2 to allow the cooling action by the refrigerant fluid circulating in said heat exchanger 7.

Preferably, a layer 10 produced with a thermally insulating material is provided between said first part 3a and said second part 3b of the housing 3.

This prevents the portion of fluid passing through the heat exchanger 7, which is at a lower temperature, from absorbing thermal energy from the portion of fluid passing through the heat exchanger 8, which is at a higher temperature.

Said heat exchanger 8 also comprises a duct 11 wound around said part 3b of the housing 3 of the rotating body 2.

Said duct 11 can in turn comprise a pipe coiled around said housing or can be produced directly in the thickness of the part 3b of the housing 3, as shown schematically in Fig. 2.

Preferably, said second part 3b of the housing 3 is provided with fins 12 or the like to increase the heat exchange surface and increase the thermal energy exchanged by the portion of fluid passing through the heat exchanger 8, with the outside.

The result is a cooled rotating member provided with a more compact cooling device, simplified with respect to prior art systems and which can be integrated perfectly on machinery such as machine tools or the like.

The invention has been described for non-limiting illustrative purposes according to some preferred examples of embodiment. Those skilled in the art may find numerous other embodiments, all falling within the scope of protection of the claims below.

## Claims

1. A cooled rotating member, in particular of machine tools, comprising a rotating body (2) enclosed in a housing (3) and a cooling device (4), for cooling said rotating body (2) and said housing (3), comprising at least one compressor (5) to compress and circulate a refrigerant fluid, an expansion valve (6) of said refrigerant fluid, at least a first heat exchanger (7) having its inlet connected to said expansion valve and its outlet connected to said compressor, at least a second heat exchanger (8) having its inlet connected to said compressor and its outlet connected to said expansion valve, said first heat exchanger (7) being produced in said housing (3) of the rotating body, **characterized in that** said compressor (5) is connected mechanically to said rotating body (2) to make use of the mechanical energy supplied by the rotating body (2) to drive the compressor (5) in rotation.

2. The cooled rotating member according to claim 1, **characterized in that** said compressor (5) is connected directly to said rotating body (2).

3. The cooled rotating member according to claim 1, **characterized in that** said compressor (5) is connected to said rotating body (2) by means of a mechanical reduction unit.

4. The cooled rotating member according to any one of the preceding claims, **characterized in that** said compressor (5) is a volumetric compressor.

5. The cooled rotating member according to any one of the preceding claims, **characterized in that** said compressor (5) is a centrifugal compressor.

6. The cooled rotating member according to any one of the preceding claims, **characterized in that** said expansion valve (6) is mounted on the rotating member, in proximity of the housing (3) or on said housing (3) of the rotating member (2).

7. The cooled rotating member according to any one of the preceding claims, **characterized in that** said second heat exchanger (8) is produced in said housing (3) of the rotating member (2), said first heat exchanger (7) being positioned in close proximity of the rotating body (2) to be cooled.

8. The cooled rotating member according to any one of the preceding claims, **characterized in that** said first heat exchanger (7) comprises a duct wound around said housing (3).

9. The cooled rotating member according to claim 7 or 8, **characterized in that** said second heat exchanger (8) comprises a duct wound around said housing (3), a layer (10) of thermally insulating material being interposed between said first (7) and said second (8) heat exchanger.

10. The cooled rotating member according to any one of the preceding claims, **characterized in that** said housing (3) comprises a first part (3a), in which the first heat exchanger (7) is produced, and a second part (3b), in which said second heat exchanger (8) is produced.

11. The cooled rotating member according to claim 10, **characterized in that** said second part (3b) of the housing (3) is provided with fins (12) or the like to increase the heat exchange surface and consequently the thermal energy exchanged by the portion of fluid that passes through said second heat exchanger (8) with the outside.

12. The cooled rotating member according to any one of the preceding claims, **characterized in that** said rotating body (2) is a rotor of an electrospindle or of an electric motor, and said housing (3) is a stator of an electrospindle or of an electric motor.

## Patentansprüche

1. Gekühltes Drehelement, insbesondere für Werkzeugmaschine, umfassend einen rotierenden Körper (2), der in einem Gehäuse (3) eingeschlossen ist, und eine Kühlvorrichtung (4) zum Kühlen des besagten rotierenden Körpers (2) und des besagten Gehäuses (3), umfassend mindestens einen Kompressor (5) zum Komprimieren und zum Zirkulieren einer Kühlflüssigkeit, ein Expansionsventil (6) der besagten Kühlflüssigkeit, mindestens einen ersten Wärmeaustauscher (7), dessen Eingang mit dem besagten Expansionsventil und dessen Ausgang mit dem besagten Kompressor verbunden ist, mindestens einen zweiten Wärmeaustauscher (8), dessen Eingang mit dem besagten Kompressor und dessen Ausgang mit dem besagten Expansionsventil verbunden ist, wobei der besagte erste Wärmeaustauscher (7) in dem besagten Gehäuse (3) des rotierenden Körpers angefertigt wird, **gekennzeichnet dadurch, dass** der besagte Kompressor (5) mechanisch mit dem besagten rotierenden Körper (2) verbunden ist, um Gebrauch zu machen von der mechanischen Energie, die vom rotierenden Körper (2) geliefert wird, um den Kompressor (5) zur Rotation anzutreiben.

2. Das gekühlte Drehelement ist gemäß Anspruch 1 **dadurch gekennzeichnet, dass** der besagte Kompressor (5) direkt mit dem besagten rotierenden Körper (2) verbunden ist.

3. Das gekühlte Drehelement ist gemäß Anspruch 1 **dadurch gekennzeichnet, dass** der besagte Kompressor (5) mit dem besagten rotierenden Körper (2) durch eine mechanische Reduktionseinheit verbunden ist.

4. Das gekühlte Drehelement ist gemäß einem jeden der vorangegangenen Ansprüche **dadurch gekennzeichnet, dass** besagter Kompressor ein volumetrischer Kompressor ist.

5. Das gekühlte Drehelement ist gemäß einem jeden der vorangegangenen Ansprüche **dadurch gekennzeichnet, dass** besagter Kompressor (5) ein Zentrifugalkompressor ist.

6. Das gekühlte Drehelement ist gemäß einem jeden der vorangegangenen Ansprüche **dadurch gekennzeichnet, dass** besagtes Expansionsventil (6) auf dem Drehelement in der Nähe des Gehäuses (3) oder auf dem besagten Gehäuse (3) des Drehelementes (2) montiert ist.

7. Das gekühlte Drehelement ist gemäß einem jeden der vorangegangenen Ansprüche **dadurch gekennzeichnet, dass** der besagte zweite Wärmeaustauscher (8) in dem besagten Gehäuse (3) des Drehelementes (2) angefertigt wird, wobei der besagte erste Wärmeaustauscher (7) in unmittelbarer Nähe zum Drehkörper (2) positioniert ist, damit dieser gekühlt wird.

8. Das gekühlte Drehelement ist gemäß einem jeden der vorangegangenen Ansprüche **dadurch gekennzeichnet, dass** der besagte erste Wärmeaustauscher (7) eine Leitung umfasst, die rund um das besagte Gehäuse (3) gewickelt ist.

9. Das gekühlte Drehelement ist gemäß Anspruch 7 oder 8 **dadurch gekennzeichnet, dass** der besagte zweite Wärmeaustauscher (8) eine Leitung, die rund um das besagte Gehäuse (3) gewickelt ist, und eine Schicht (10) thermisch isolierenden Materials, die zwischen dem besagten ersten (7) und dem besagten zweiten (8) Wärmeaustauscher eingefügt ist, umfasst.

10. Das gekühlte Drehelement ist gemäß einem jeden der vorangegangenen Ansprüche **dadurch gekennzeichnet, dass** das besagte Gehäuse (3) einen ersten Teil (3a), in dem der erste Wärmeaustauscher (7) angefertigt wird, und einen zweiten Teil (3b), in dem der besagte zweite Wärmeaustauscher (8) angefertigt wird, umfasst.

11. Das gekühlte Drehelement ist gemäß Anspruch 10 **dadurch gekennzeichnet, dass** der besagte zweite Teil (3b) des Gehäuses (3) mit Lamellen (12) oder Ähnlichem ausgestattet ist, um die Wärmeaustauschfläche und folglich die Wärmeenergie zu erhöhen, die durch den Anteil der Flüssigkeit, die durch den besagten zweiten Wärmeaustauscher (8) läuft, mit der Außenumgebung ausgetauscht wird.

12. Das gekühlte Drehelement ist gemäß einem jeden der vorangegangenen Ansprüche **dadurch gekennzeichnet, dass** der besagte Drehkörper (2) ein Rotor einer Elektrospindel oder eines Elektromotors ist und das besagte Gehäuse (3) ein Stator einer Elektrospindel oder eines Elektromotors ist.

## Revendications

1. Un élément rotatif refroidi, en particulier pour machines-outils, comprenant un corps rotatif (2) enfermé dans un logement (3) et un dispositif de refroidissement (4), pour ledit corps rotatif (2) et ledit logement (3), comprenant au moins un compresseur (5) pour comprimer et faire circuler un fluide réfrigérant, une vanne d'expansion (6) dudit fluide réfrigérant, au moins un premier échangeur de chaleur (7) dont l'entrée est raccordée à ladite vanne d'expansion et la sortie est raccordée audit compresseur, au moins un deuxième échangeur de chaleur (8) dont l'entrée est raccordée audit compresseur et la sortie est raccordée à ladite vanne d'expansion, ledit premier échangeur de chaleur (7) étant réalisé dans ledit logement (3) du corps rotatif, **caractérisé par le fait que** ledit compresseur (5) est raccordé mécaniquement audit corps rotatif (2) pour utiliser l'énergie mécanique fournie par le corps rotatif (2) afin d'entraîner le compresseur (5) en rotation.

2. L'élément rotatif refroidi selon la revendication 1, **caractérisé par le fait que** ledit compresseur (5) est directement raccordé audit corps rotatif (2).

3. L'élément rotatif refroidi selon la revendication 1, **caractérisé par le fait que** ledit compresseur (5) est raccordé audit corps rotatif (2) à l'aide d'une unité de réduction mécanique.

4. L'élément rotatif refroidi selon l'une des revendications précédentes, **caractérisé par le fait que** ledit compresseur (5) est un compresseur volumétrique.

5. L'élément rotatif refroidi selon l'une des revendications précédentes, **caractérisé par le fait que** ledit compresseur (5) est un compresseur centrifuge.

6. L'élément rotatif refroidi selon l'une des revendications précédentes, **caractérisé par le fait que** ladite vanne d'expansion (6) est montée sur l'élément rotatif, à proximité du logement (3) ou sur ledit logement (3) de l'élément rotatif (2).

7. L'élément rotatif refroidi selon l'une des revendications précédentes, **caractérisé par le fait que** ledit deuxième échangeur de chaleur (8) est réalisé dans ledit logement (3) de l'élément rotatif (2), ledit premier échangeur de chaleur (7) étant positionné à proximité immédiate du corps rotatif (2) à refroidir.

8. L'élément rotatif refroidi selon l'une des revendications précédentes, **caractérisé par le fait que** ledit premier échangeur de chaleur (7) comprend une conduite enroulée autour dudit logement (3).

9. L'élément rotatif refroidi selon la revendication 7 ou 8, **caractérisé par le fait que** ledit deuxième échangeur de chaleur (8) comprend une conduite enroulée autour dudit logement (3), une couche (10) de matériau d'isolation thermique étant intercalée entre ledit premier (7) et ledit deuxième (8) échangeur de chaleur.

10. L'élément rotatif refroidi selon l'une des revendications précédentes, **caractérisé par le fait que** ledit logement (3) comprend une première partie (3a), dans laquelle est réalisé le premier échangeur de chaleur (7), et une deuxième partie (3b), dans laquelle est réalisé le deuxième échangeur de chaleur (8).

11. L'élément rotatif refroidi selon la revendication 10, **caractérisé par le fait que** ladite deuxième partie (3b) du logement (3) est dotée d'ailettes (12) ou similaires pour augmenter la surface d'échange de chaleur et, par conséquent, l'énergie thermique échangée par la portion de fluide qui passe à travers ledit deuxième échangeur de chaleur (8) avec l'extérieur.

12. L'élément rotatif refroidi selon l'une des revendications précédentes, **caractérisé par le fait que** ledit corps rotatif (2) est un rotor d'un électromandrin ou d'un moteur électrique, et **par le fait que** ledit logement (3) est un stator d'un électromandrin ou d'un moteur électrique.
